# EUROPEAN PATENT APPLICATION

(11) **EP 3 783 778 A1**
(43) Date of publication of application: **24.02.2021**
(21) Application number: 19814815.7
(22) Date of filing: 05.06.2019
(51) Int. Cl.: H02K 5/24, B60K 6/26, B60K 6/44, H02K 5/20, H02K 7/116

(54) **DYNAMO-ELECTRIC MACHINE, AND DRIVE DEVICE FOR VEHICLE COMPRISING DYNAMO-ELECTRIC MACHINE**

(30) Priority: 08.06.2018 JP 2018110687
(71) Applicant: AISIN AW CO., LTD., Fujiicho Anjo-shi Aichi 444-1192 (JP)
(72) Inventor: IWASE Takuro, Anjo-shi, Aichi 444-1192 (JP); ASANO Masaomi, Anjo-shi, Aichi 444-1192 (JP); YAMAOKA Daisuke, Anjo-shi, Aichi 444-1192 (JP); TORII Takeshi, Anjo-shi, Aichi 444-1192 (JP); SANJI Hiroaki, Anjo-shi, Aichi 444-1192 (JP); SUZUKI Jun, Anjo-shi, Aichi 444-1192 (JP); FUJISHIMA Isao, Anjo-shi, Aichi 444-1192 (JP); NAKASHIMA Keisuke, Anjo-shi, Aichi 444-1192 (JP)
(74) Representative: Kramer Barske Schmidtchen Patentanwälte PartG mbB
(86) International application number: PCT/JP2019/022380
(87) International publication number: WO 2019/235537

(57) **Abstract**

When a the case of a rotary electric machine has an inner case member that houses a stator and an outer case member that houses the inner case member, a vibration that is transmitted from the stator to the outer case member via the inner case member is suppressed. The inner case portion (1) is provided with a first tubular portion (11) and a first protruding portion (13) that protrudes toward a radial inner side (R2) from the first tubular portion (11) on an axial first side (L1). The outer case portion (2) is provided with a second tubular portion (12) and a second protruding portion (14) that protrudes toward the radial inner side (R2) from the second tubular portion (12) on the axial first side (L1) with respect to the first protruding portion (13). A coolant flow path (16) is formed between the first tubular portion (11) and the second tubular portion (12), and the first protruding portion (13) and the second protruding portion (14) are fixed to each other.

## Description

### TECHNICAL FIELD

The present invention relates to a rotary electric machine and a vehicle drive device provided with the rotary electric machine.

### BACKGROUND ART

Japanese Unexamined Patent Application Publication No. 9-93871 (JP 9-93871 A) discloses a rotary electric machine that is housed in a housing (1) formed by fitting two case members (11, 12), which each have a cylindrical shape with a bottom and have different diameters, from directions in which opening portions face each other (reference symbols in parentheses in the BACKGROUND ART are those of the referenced document). A flange portion protruding to a radial outer side is formed on the opening portion side of the large-diameter outer case member (12). A flange portion protruding to the radial outer side so as to have a similar diameter as that of the flange portion of the outer case member (12) is formed on the bottom portion side of the small-diameter inner case member (11). The case (1) is formed by fastening the flange portions of the case members (11, 12) together with a fastening member.

A coolant flow path (P) is formed between an outer peripheral surface of the inner case member (11) and an inner peripheral surface of the outer case member (12). Since a stator core (21) of the rotary electric machine is press-fitted so as to abut against the inner peripheral surface of the inner case member (11), the stator core (21) of the rotary electric machine is cooled appropriately. However, since both case members (11, 12) are fixed on the radial outer side of the outer case member (12), vibration of the stator core (21) transmitted via the inner case member (11) is easily transmitted radially outward of the outer case member (2). Thus, vibration and sound may be further transmitted from the outer case member (2) to the outside.

### Related Art Documents

### Patent Documents

Patent Document 1: Japanese Unexamined Patent Application Publication No. 9-93871 (JP 9-93871 A)

### SUMMARY OF THE INVENTION

### Problem to be Solved by the Invention

In view of the above background, when a case of the rotary electric machine has an inner case member that houses a stator and an outer case member that houses the inner case member, it is desired that vibration transmitted from the stator to the outer case member via the inner case member be suppressed.

### Means for Solving the Problem

In view of the above, as one aspect, a rotary electric machine includes: a stator; a rotor; and a case that houses the stator and the rotor, in which the case has an inner case portion to which the stator is fixed, and an outer case portion that houses the inner case portion, the inner case portion has a first tubular portion having an inner peripheral surface that is in contact with an outer peripheral surface of the stator, and a first protruding portion that protrudes to a radial inner side from the first tubular portion on an axial first side that is one side in an axial direction with respect to the stator, the outer case portion has a second tubular portion that has a tubular shape and that covers an outer peripheral surface of the first tubular portion, and a second protruding portion that protrudes to a radial inner side from the second tubular portion on the axial first side with respect to the first protruding portion, a coolant flow path is formed between the first tubular portion and the second tubular portion, and the first protruding portion and the second protruding portion are fixed to each other.

With this configuration, the inner case portion and the outer case portion are fixed to each other, on the radial inner side of the first tubular portion of the inner case portion. When the inner case portion and the outer case portion are fixed on the radial outer side of the first tubular portion of the inner case portion, vibration transmitted from the stator to the inner case portion is easily transmitted to the outer peripheral surface side of the outer case portion. With the present configuration, since both case portions are fixed on the radial inner side of the first tubular portion, it is possible to damp the vibration that is transmitted from the stator to the outer case portion via the inner case portion, compared to a case in which both cases are fixed on the radial outer side of the first tubular portion. As a result, it is possible to suppress sound and vibration transmitted from the outer case portion to the outside. With the present configuration, when a case of the rotary electric machine has an inner case member that houses a stator and an outer case member that houses the inner case member, the vibration transmitted from the stator to the outer case member via the inner case member can be suppressed.

Further features and advantages of the rotary electric machine and features and advantages of the vehicle drive device including the rotary electric machine will become apparent from the following description of the embodiments described with reference to the drawings.

### BRIEF DESCRIPTION OF THE DRAWINGS

[FIG. 1] FIG. 1 is an axial sectional view of a vehicle drive device.
[FIG. 2] FIG. 2 is a skeleton diagram of the vehicle drive device.
[FIG. 3] FIG. 3 is an axial sectional view of another example of the vehicle drive device.
[FIG. 4] FIG. 4 is a plan view of an inner case portion as viewed in the axial direction.
[FIG. 5] FIG. 5 is an axial sectional view of an example of a biaxial vehicle drive device.
[FIG. 6] FIG. 6 is a skeleton diagram of the vehicle drive device of FIG. 5.

### MODES FOR CARRYING OUT THE INVENTION

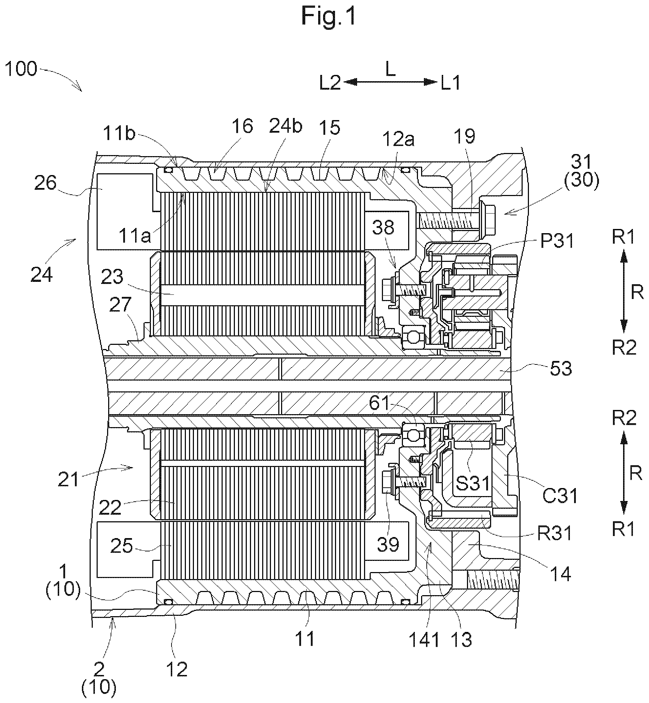

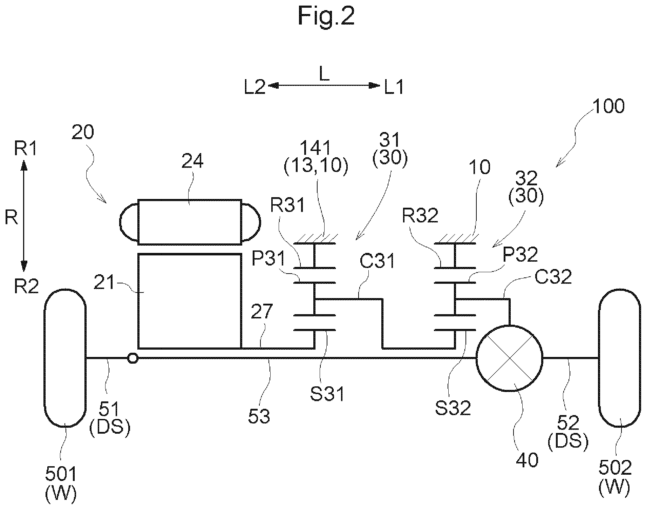

Hereinafter, embodiments of a rotary electric machine and a vehicle drive device including the rotary electric machine will be described with reference to the drawings. FIG. 1 is an axial sectional view of a vehicle drive device 100 including a rotary electric machine 20. FIG. 2 is a skeleton diagram of the vehicle drive device 100 including the rotary electric machine 20. The vehicle drive device 100 is, for example, a drive device installed in a hybrid vehicle in which an internal combustion engine (not shown) and the rotary electric machine 20 serve as a driving force source for a first wheel 501 and a second wheel 502, or an electric vehicle in which the rotary electric machine 20 serves as the driving force source for the first wheel 501 and the second wheel 502. As shown in FIGS. 1 and 2, the vehicle drive device 100 according to the present embodiment includes only the rotary electric machine 20 as the driving force source for the first wheel 501 and the second wheel 502. In the case of a two-wheel drive four-wheel vehicle, an electric vehicle can be realized by the configuration. Further, in the case of a four-wheel drive four-wheel vehicle, a hybrid vehicle can be realized by driving the other two wheels with the driving force of the internal combustion engine. It is needless to say that, in the case of a four-wheel drive four-wheel vehicle, a four-wheel drive electric vehicle can also be realized by applying the vehicle drive device 100 of the present embodiment to the other two wheels.

In the following description, a "drive coupling" refers to a state in which two rotary elements are coupled so as to be able to transmit a driving force, and the state includes a state in which the two rotary elements are coupled so as to rotate integrally or a state in which the two rotary elements are coupled so as to be able to transmit the driving force via one transmission member or two or more transmission members. Examples of such a transmission member include various members that transmit rotation at the same speed or at a shifted speed, such as a shaft, a gear mechanism, a belt, and a chain. The transmission member may include an engagement device that selectively transmits rotation and a driving force, such as a friction engagement device or a meshing engagement device. However, in a speed reduction device 30 and a differential gear device 40 described below, when a "drive coupling" is performed for each rotary element, this indicates a state in which three or more rotary elements included in the device are drive coupled to each other without interposing other rotary elements.

Further, in the following description, when something is expressed as "tubular" or "cylindrical" and the like, it means that the overall schematic shape is a tube or a cylinder even if the shape has some irregularly shaped parts. The present embodiment is not limited to these, and the same applies to other expressions related to shapes that are used by applying the term "shape".

As shown in FIGS. 1 and 2, the vehicle drive device 100 is provided with a case 10, the rotary electric machine 20 having a rotor shaft 27 for outputting a driving force, the speed reduction device 30 including a planetary gear mechanism, and the differential gear device 40. Although details will be described below, the speed reduction device 30 reduces the speed of rotation transmitted from the rotary electric machine 20 and transmits the driving force to the differential gear device 40. The differential gear device 40 distributes the driving force from the rotary electric machine 20 to each of the plurality of wheels (501, 502). In the present embodiment, the differential gear device 40 distributes the driving force that is transmitted from the rotary electric machine 20 via the speed reduction device 30 to each of a first drive shaft 51 and a second drive shaft 52. In the present embodiment, the first drive shaft 51 is drive coupled to a distribution output shaft 53. The differential gear device 40 distributes the driving force to the second drive shaft 52 and the distribution output shaft 53, and the distributed driving force is transmitted to the first drive shaft 51 via the distribution output shaft 53.

In the vehicle drive device 100 of the present embodiment, the rotary electric machine 20, the speed reduction device 30, the differential gear device 40, the first drive shaft 51, the second drive shaft 52, and the distribution output shaft 53 are disposed coaxially with respect to the rotor shaft 27 of the rotary electric machine 20. Thus, a direction along the rotor shaft 27 of the rotary electric machine 20 is equivalent to a direction along a rotating axis of the vehicle drive device 100, and a direction along a diameter of the rotor shaft 27 of the rotary electric machine 20 is equivalent to a direction along a diameter of the vehicle drive device 100. In the present embodiment, the direction along the rotor shaft 27 of the rotary electric machine 20 is referred to as an axial direction L of the rotary electric machine 20 and the vehicle drive device 100, and the direction along the diameter of the rotor shaft 27 of the rotary electric machine 20 is referred to as a radial direction R of the rotary electric machine 20 and the vehicle drive device 100. In the axial direction L, the side on which the differential gear device 40 is disposed with respect to the speed reduction device 30 is referred to as an axial first side L1, and the side on which the rotary electric machine 20 is disposed with respect to the speed reduction device 30 is referred to as the axial second side L2. Further, in the radial direction R, the outer side away from the rotor shaft 27 is referred to as a radial outer side R1, and the inner side toward the rotor shaft 27 side is referred to as a radial inner side R2.

Further, in the vehicle drive device 100 of the present embodiment, the rotary electric machine 20, the speed reduction device 30, and the differential gear device 40 are disposed side by side in the order of a power transmission path. As described below, the speed reduction device 30 has a first planetary gear mechanism 31 and a second planetary gear mechanism 32. In consideration of this, in the order of the power transmission path, the rotary electric machine 20, the first planetary gear mechanism 31, the second planetary gear mechanism 32, and the differential gear device 40 are disposed side by side in the described order. Also in the order of arrangement along the axial direction, the rotary electric machine 20, the speed reduction device 30 (the first planetary gear mechanism 31 and the second planetary gear mechanism 32), and the differential gear device 40 are disposed side by side in the following order: the rotary electric machine 20; the first planetary gear 31; the second planetary gear mechanism 32; and the differential gear device 40.

The case 10 houses the rotary electric machine 20, the speed reduction device 30, and the differential gear device 40 inside. Although not shown, the case 10 further houses inside, a part of the first drive shaft 51 (an end of the first drive shaft 51 on the axial first side L1), a part of the second drive shaft 52 (an end of the second drive shaft 52 on the axial second side L2), and the distribution output shaft 53. The case 10 includes an inner case portion 1 and an outer case portion 2 having a double-tube structure, a cover portion (not shown) disposed on the axial second side L2 of the inner case portion 1 and the outer case portion 2, and a cover case (not shown) disposed on the axial first side L1 of the inner case portion 1 and the outer case portion 2. The inner case portion 1 is housed on the radial inner side R2 of the outer case portion 2 such that the entire area of the inner case portion 1 overlaps with the outer case portion 2 when viewed in the radial direction. Mainly the rotary electric machine 20 is housed on the radial inner side R2 of the inner case portion 1 and the outer case portion 2 that have the double-tube structure.

The rotary electric machine 20 is a permanent magnet type rotary electric machine that is provided with a rotor 21 having permanent magnets 23 inside a rotor core 22, a stator 24 in which a stator coil 26 is wound around a stator core 25, and a rotor shaft 27 that is coupled to the rotor core 22. The rotor shaft 27 is coupled to the rotor core 22 on the radial inner side R2 of the rotor core 22, and the rotor 21 and the rotor shaft 27 rotate integrally. In the present embodiment, the rotary electric machine 20 is a permanent magnet type rotary electric machine, but may be another type of rotary electric machine such as an induction type rotary electric machine.

The rotor shaft 27 is formed in a cylindrical shape. As will be described later, a portion of the rotor shaft 27 that protrudes out from the rotor core 22 toward the axial first side L1 along the axial direction L is rotatably supported via a first rotor bearing 61 (rotor bearing). A portion of the rotor shaft 27 that protrudes out from the rotor core 22 toward the axial second side L2 along the axial direction L is rotatably supported via a second rotor bearing (not shown).

That is, the rotary electric machine 20 includes the stator 24, the rotor 21, and the case 10 that houses the stator 24 and the rotor 21, and the case 10 includes the inner case portion 1 to which the stator 24 is fixed, and the outer case portion 2 that houses the inner case portion 1. The inner case portion 1 has a first tubular portion 11 having an inner peripheral surface 11a that is in contact with an outer peripheral surface 24b of the stator 24, and a first protruding portion 13 that protrudes toward the radial inner side R2 from the first tubular portion 11 on the axial first side L1 with respect to the stator 24. The outer case portion 2 has a second tubular portion 12 that has a tubular shape and that covers an outer peripheral surface 11b of the first tubular portion 11 of the inner case portion 1, and a second protruding portion 14 that protrudes toward the radial inner side R2 from the second tubular portion 12 on the axial first side L1 with respect to the first protruding portion 13 of the inner case portion 1. The inner case portion 1 and the outer case portion 2 are coupled by having the first protruding portion 13 and the second protruding portion 14 coupled to each other. In the present embodiment, the first protruding portion 13 and the second protruding portion 14 are fixed by a fastening member such as a bolt 19.

When the inner case portion 1 and the outer case portion 2 are fixed on the radial outer side R1 of the first tubular portion 11 of the inner case portion 1, vibration transmitted from the stator 24 to the inner case portion 1 is easily transmitted to the outer peripheral surface side of the outer case portion 2. However, in the present embodiment, the inner case portion 1 and the outer case portion 2 are fixed on the radial inner side R2 of the first tubular portion 11. Thus, compared with a case in which the inner case portion 1 and the outer case portion 2 are fixed on the radial outer side R1 of the first tubular portion 11, vibration transmitted from the stator 24 to the outer case portion 2 via the inner case portion 1 can be damped. As a result, it is possible to suppress sound and vibration transmitted from the outer case portion 2 to the outside.

In addition, the present embodiment indicates as an example, a form in which the first protruding portion 13 is a bottom wall portion provided along the entire circumference in a circumferential direction, and the second protruding portion 14 is a flange part provided along the entire circumference. However, the first protruding portion 13 and the second protruding portion 14 do not need to be continuous in the circumferential direction, and may be formed intermittently in the circumferential direction.

Further, in the present embodiment, the first protruding portion 13 is formed integrally with the first tubular portion 11 and the second protruding portion 14 is formed integrally with the second tubular portion 12. Rigidity of the inner case portion 1 is higher in the case described above, compared to a case in which the first protruding portion 13 and the first tubular portion 11 are formed as separate bodies and are coupled to each other. Further, the vibration transmitted from the stator 24 to the first tubular portion 11 can be appropriately transmitted to the first protruding portion 13 to damp the vibration. The first protruding portion 13 and the second protruding portion 14 are fixed while being in contact with each other in the axial direction L. In this way, the inner case portion 1 and the outer case portion 2 can be fixed to each other while being properly positioned. Not limited to such a configuration, the first protruding portion 13 is not hindered from being formed as a separate body from the first tubular portion 11, and the second protruding portion 14 is not hindered from being formed as a separate body from the second tubular portion 12. Further, the first protruding portion 13 and the second protruding portion 14 are not hindered from being fixed while being in contact with each other in the radial direction R.

Further, in the present embodiment, the first protruding portion 13 supports the first rotor bearing 61 that supports the rotor 21 so that the rotor 21 is rotatable, on the axial first side L1 with respect to the rotor 21. That is, the first protruding portion 13 is fixed to the second protruding portion 14 so as to fix the outer case portion 2 and the inner case portion 1 to which the stator 24 is fixed, and supports the rotor shaft 27 via the first rotor bearing 61 on the axial first side L1 of the rotor core 22 so that the rotor shaft 27 is rotatable. Since the rotor 21 can also be supported by the first protruding portion 13 that fixes the inner case portion 1 and the outer case portion 2, the structures of the rotary electric machine 20 and the vehicle drive device 100 can be simplified.

On the axial second side L2 of the rotor 21, the rotor shaft 27 is supported by a second rotor bearing (not shown) supported by a cover (not shown) so that the rotor shaft 27 is rotatable. The outer case portion 2 includes an opening portion that opens to the axial second side L2. The case 10 has a cover portion that covers the opening portion. The cover portion supports the second rotor bearing that supports the rotor 21 on the axial second side L2 with respect to the rotor 21 so that the rotor 21 is rotatable. Thus, on the axial second side L2 of the rotor 21, the rotor shaft 27 is supported by the cover portion via the second rotor bearing so that the rotor shaft 27 is rotatable.

In addition to the inner case portion 1, the outer case portion 2, and the cover portion, the case 10 has a cover case that covers an opening portion 18 that opens to the axial first side L1 of the outer case portion 2 and that houses the differential gear device 40. A length of the outer case portion 2 in the axial direction L is longer than that of the inner case portion 1, and as described above, the inner case portion 1 is housed inside the outer case portion 2 so that the entire region of the inner case portion 1 overlaps with the outer case portion 2 when viewed in the radial direction. For example, the inner case portion 1 houses the rotary electric machine 20 in an inner space on the radial inner side R2, and the outer case portion 2 houses the rotary electric machine 20 housed in the inner case portion 1, and the speed reduction device 30, in the inner space of the radial inner side R2. The cover case houses the differential gear device 40 in the inner space on the radial inner side R2. For example, the cover case supports the differential gear device 40 via a differential case bearing (not shown) so that the differential gear device 40 is rotatable, and the cover portion supports the distribution output shaft 53 via an output bearing (not shown).

A groove portion 15 is formed on the outer peripheral surface 11b of the first tubular portion 11 of the inner case portion 1 so that the groove portion 15 has a part that abuts against an inner peripheral surface 12a of the second tubular portion 12 and a part that is spaced away from the inner peripheral surface 12a of the second tubular portion 12. Thus, a coolant flow path 16 through which a coolant flows is formed between the first tubular portion 11 and the second tubular portion 12. The groove portion 15 may be formed so as to be continuous in a helix shape on the outer peripheral surface 11b of the first tubular portion 11, or a plurality of the groove portions 15 may be each formed to be an independent groove. Further, instead of such a groove portion 15, a recessed portion that is recessed toward the radial inner side R2 may be formed on the outer peripheral surface 11b of the first tubular portion 11 along the circumferential direction so that one large coolant flow path 16 is formed.

As described above, the stator 24 is fixed to the inner case portion 1 so that the outer peripheral surface 24b of the stator 24 abuts against the outer peripheral surface 11b of the first tubular portion 11. In the present embodiment, the outer peripheral surface 24b of the stator 24 is fitted to the inner peripheral surface 11a of the first tubular portion 11. Since the stator 24 and the inner case portion 1 are in close contact with each other, an efficiency of heat exchange between the stator 24 and the coolant flow path 16 formed between the first tubular portion 11 and the second tubular portion 12 is increased, and the stator 24 can be cooled efficiently.

The speed reduction device 30 is disposed in an internal space formed on the radial inner side R2 of the outer case portion 2 on the axial first side L1 of the rotary electric machine 20. In the present embodiment, the speed reduction device 30 includes the first planetary gear mechanism 31 and the second planetary gear mechanism 32. The first planetary gear mechanism 31 has a first rotating element that is drive coupled to the rotary electric machine 20, a second rotating element, and a third rotating element that is coupled to a fixed member so that the third rotating element is non-rotatable. The second planetary gear mechanism 32 has a fourth rotating element that is drive coupled to the second rotating element of the first planetary gear mechanism 31, a fifth rotating element that is drive coupled to the differential gear device 40, and a sixth rotating element that is coupled to a fixed member so that the sixth rotating element is non-rotatable.

The first planetary gear mechanism 31 is a single pinion type planetary gear mechanism that has a first sun gear S31 (first rotating element), a first ring gear R31 (third rotating element), a first carrier C31 (second rotating element), and a plurality of first pinion gears P31. The first sun gear S31 is an input element of the first planetary gear mechanism 31, and is coupled to the rotor shaft 27 of the rotary electric machine 20 so as to rotate integrally therewith. The first carrier C31 is an output element of the first planetary gear mechanism 31, and is coupled to a second sun gear S32 (fourth rotating element) of the second planetary gear mechanism 32 as described later. The first ring gear R31 is a fixed element of the first planetary gear mechanism 31, and is supported by a first support portion 141 so that the first ring gear R31 does not rotate. Here, the first ring gear R31 is coupled to the first support portion 141 by a fastening member 39 such as a bolt.

The first support portion 141 is provided on the first protruding portion 13 of the inner case portion 1. Thus, the first protruding portion 13 supports at least one fixed element (here, the first ring gear R31) in the speed reduction device 30. Since the first protruding portion 13 that fixes the inner case portion 1 and the outer case portion 2 can also support the first ring gear R31 that is a fixed element of the first planetary gear mechanism 31, the structure of the vehicle drive device 100 can be simplified. Further, a fixing portion 38 of the first protruding portion 13 and the first ring gear R31, in the first support portion 141, is disposed on the radial inner side R2 with respect to the first ring gear R31. Compared to a case in which the fixing portion 38 is provided at the same position in the radial direction R as the first ring gear R31 or towards the radial outer side R1 thereof, the vibration transmitted from the first planetary gear mechanism 31 to the inner case portion 1 can be damped. Thus, the sound and the vibration transmitted to the outer case portion 2 via the inner case portion 1 and then to the outside from the outer case portion 2 can be suppressed to be small.

The first pinion gears P31 are disposed so as to mesh with the first sun gear S31 and the first ring gear R31, and are supported by the first carrier C31 so that the first pinion gears P31 are rotatable. Each first pinion gear P31 is configured to rotate (spin) around the axis of the first pinion gear P31 and rotate (revolve) around the axis of the first sun gear S31. Although not shown, the plurality of first pinion gears P31 are provided at intervals along the revolution locus of the first pinion gears P31.

As described above, the second planetary gear mechanism 32 is disposed on the axial first side L1 with respect to the first planetary gear mechanism 31, that is, on the opposite side of the first planetary gear mechanism 31 from the rotary electric machine 20 side. The second planetary gear mechanism 32 is a single pinion type planetary gear mechanism that has the second sun gear S32 (fourth rotating element), a second ring gear R32 (sixth rotating element), a second carrier C32 (fifth rotating element), and a plurality of second pinion gears P32.

The second sun gear S32 is an input element of the second planetary gear mechanism 32. As described above, the second sun gear S32 (fourth rotating element) is coupled to the first carrier C31 (second rotating element) that is an output element of the first planetary gear mechanism 31. For example, the second sun gear S32 is coupled to the first carrier C31 by spline engagement. For example, the first planetary gear mechanism 31 and the second planetary gear mechanism 32 are formed independently, and the first planetary gear mechanism 31 and the second planetary gear mechanism 32 are coupled by spline engagement. However, the first carrier C31 and the second sun gear S32 are not limited to being configured by separate members, and the first carrier C31 and the second sun gear S32 may be configured by one component. For example, the first planetary gear mechanism 31 and the second planetary gear mechanism 32 may be configured integrally to form one speed reduction device 30. Further, even when the first carrier C31 and the second sun gear S32 are configured of different members, the two may be coupled by welding or the like and not be limited to being coupled by spline engagement.

The second drive shaft 52 is disposed adjacent to the differential gear device 40 in the axial direction L. However, the rotary electric machine 20 and the speed reduction device 30 are provided between the first drive shaft 51 and the differential gear device 40 in the axial direction L. Thus, the first drive shaft 51 is coupled to the differential gear device 40 via the distribution output shaft 53 that extends through the rotary electric machine 20 and the speed reduction device 30. In the present embodiment, the first carrier C31 and the second sun gear S32 that rotate integrally are supported by the distribution output shaft 53 via a sliding bearing such as a bush so that the first carrier C31 and the second sun gear S32 are rotatable.

The second ring gear R32 (sixth rotating element) is a fixed element of the second planetary gear mechanism 32, and is supported by a second support portion (not shown) so as not to rotate in the circumferential direction. The second support portion is fixed to the second protruding portion 14 of the outer case portion 2 with a bolt or the like, for example. The second carrier C32 (fifth rotating element) is an output element of the second planetary gear mechanism 32. For example, the second carrier C32 is formed integrally with a differential case (not shown) of the differential gear device 40. Further, in the present embodiment, the second carrier C32 is supported by the second support portion between the second planetary gear mechanism 32 and the differential gear device 40 via a differential case bearing (not shown) so that the second carrier C32 is rotatable.

The second pinion gears P32 are disposed so as to mesh with the second sun gear S32 and the second ring gear R32, and are supported by the second carrier C32 so that the second pinion gears P32 are rotatable. Each second pinion gear P32 is configured to rotate (spin) around the axis of the second pinion gear P32 and rotate (revolve) around the axis of the second sun gear S32. Although not shown, the plurality of second pinion gears P32 are provided at intervals along the orbit of the second pinion gears P32.

The differential gear device 40 distributes the driving force from the rotary electric machine 20 transmitted via the speed reduction device 30 to the first wheel 501 and the second wheel 502. Specifically, the differential gear device 40 distributes the driving force from the rotary electric machine 20 transmitted through the speed reduction device 30 to the first wheel 501 and the second wheel 502 via the first drive shaft 51 and the second drive shaft 52, which are drive coupled to the distribution output shaft 53.

For example, the differential gear device 40 has a differential case serving as an input element, a pinion shaft supported by the differential case so that the pinion shaft rotates integrally with the differential case, a first differential pinion gear and a second differential pinion gear that are supported so as to be rotatable about the pinion shaft, and a first side gear and a second side gear serving as distribution output elements, all of which are not shown. For example, the first differential pinion gear, the second differential pinion gear, the first side gear, and the second side gear are all bevel gears, and the differential gear device 40 is a differential gear device having a bevel gear type gear mechanism.

The differential case is a hollow member, and inside the differential case, the pinion shaft, a pair of the differential pinion gears (the first differential pinion gear and the second differential pinion gear), the first side gear, and the second side gear are housed. For example, the differential case is formed integrally with the second carrier C32 of the second planetary gear mechanism 32, and the second carrier C32 is configured as a part of the differential case.

The pinion shaft is inserted into the pair of differential pinion gears and rotatably supports the differential pinion gears. The pinion shaft is inserted into a through hole formed in the differential case along the radial direction R, and is engaged to the differential case by a lock member.

The pair of differential pinion gears is attached to the pinion shaft while the differential pinion gears face each other along the radial direction R with a space therebetween, and is configured to rotate about the pinion shaft in the internal space of the differential case.

The first side gear and the second side gear are rotating elements after distribution in the differential gear device 40. The first side gear and the second side gear are provided so as to be spaced away from each other along the axial direction L so as to face each other with the pinion shaft interposed therebetween, and are configured to rotate in the respective circumferential directions in the internal space of the differential case. The first side gear and the second side gear each mesh with the first differential pinion gear and the second differential pinion gear. Splines for coupling the distribution output shaft 53 are formed on the inner peripheral surface of the first side gear. Splines for coupling the second drive shaft 52 are formed on the inner peripheral surface of the second side gear.

The distribution output shaft 53 is a member that transmits the driving force from the rotary electric machine 20 distributed by the differential gear device 40 to the first drive shaft 51. The distribution output shaft 53 extends through the rotor shaft 27 of the rotary electric machine 20 on the radial direction inside R2, in the axial direction L. Splines for being coupled to the first side gear of the differential gear device 40 are formed on the outer peripheral surface of an end portion on the axial first side L1 of the distribution output shaft 53. The distribution output shaft 53 and the first side gear are coupled so as to rotate integrally by having the splines being engaged with the splines on the inner peripheral surface of the first side gear. A coupling portion for coupling the first drive shaft 51 is formed at an end portion on the axial second side L2 of the distribution output shaft 53. The coupling portion is supported by the cover portion of the case 10 via the output bearing so that the coupling portion is rotatable. Splines for coupling the first drive shaft 51 are formed on the inner peripheral surface of the coupling portion.

The first drive shaft 51 is drive coupled to the first wheel 501, and the second drive shaft 52 is drive coupled to the second wheel 502. For example, the coupling portion is provided at the end portion on the axial second side L2 of the distribution output shaft 53, and the first drive shaft 51 and the coupling portion of the distribution output shaft 53 are coupled by the splines. However, without being limited to such a configuration, for example, the configuration may be such that a flange yoke is provided at the end portion on the axial second side L2 of the distribution output shaft 53 instead of the coupling portion, and the flange yoke and the first drive shaft 51 are fastened with a bolt.

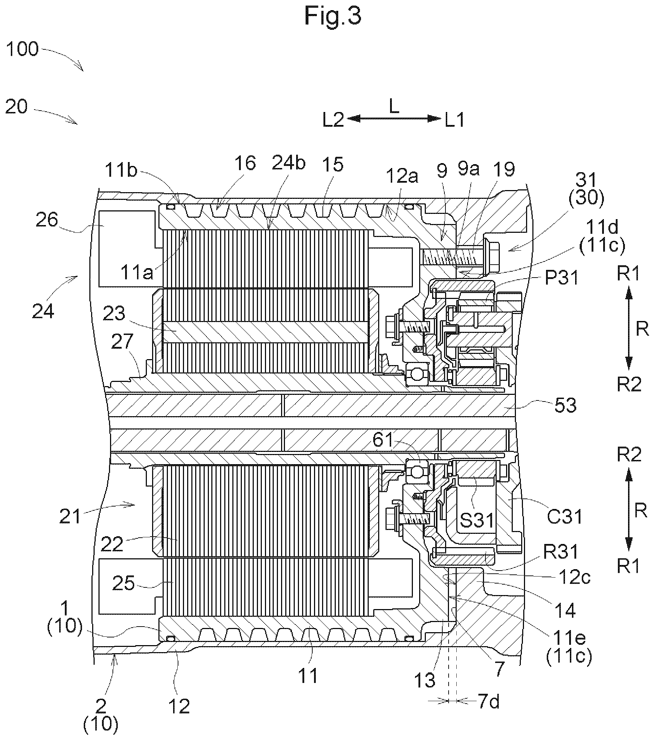

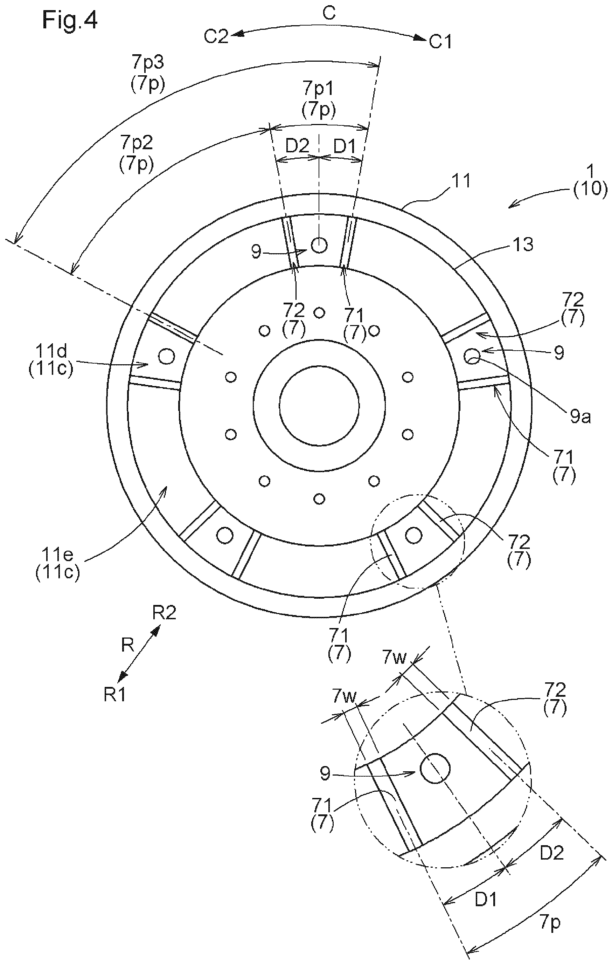

In the present embodiment, the first protruding portion 13 is formed integrally with the first tubular portion 11, and the second protruding portion 14 is formed integrally with the second tubular portion 12. Rigidity of the inner case portion 1 is higher in the case described above, compared to a case in which the first protruding portion 13 and the first tubular portion 11 are formed as separate bodies and are coupled to each other. Here, as described below with reference to FIGS. 3 and 4, it is preferable that the rigidity at a joint part between the first protruding portion 13 and the second protruding portion 14 be changed by providing a recessed groove 7 in the first protruding portion 13. By increasing the rigidity of the inner case portion 1 to reduce individual differences, it is possible to increase the adjusting accuracy of the rigidity by use of the recessed groove 7.

As described above, in the present embodiment, the first protruding portion 13 is formed in a peripheral wall shape along the entire circumference in the circumferential direction C, and the second protruding portion 14 is formed in a flange shape along the entire circumference in the circumferential direction C. Here, when the first protruding portion 13 is a circumferential wall portion that is unbroken and continuous in the circumferential direction C and the second protruding portion 14 is a flange portion that is unbroken and continuous in the circumferential direction C, the first protruding portion 13 and the second protruding portion 14 are integrally joined to the entire area in the circumferential direction C without interruption. Thus, the vibration that is transmitted through the integrated joint part may cause the case to resonate with the vibration generated in the stator 24 or a harmonic component thereof, and generate a large noise.

Therefore, as one aspect, as shown in FIGS. 3 and 4, it is preferable that the recessed groove 7 recessed in the axial direction L be provided at a plurality of locations in the circumferential direction C in at least one of the first protruding portion 13 and the second protruding portion 14 so as to reduce the rigidity of the first protruding portion 13, the second protruding portion 14, and the joint part. FIG. 3 shows a cross-sectional view in a case in which the recessed groove 7 is provided, and FIG. 4 shows a plan view of the inner case portion 1 when viewed in the axial direction, showing the inner case portion 1 viewed from the axial first side L1 toward the axial second side L2. A reference symbol 9a is a bolt hole 9a that is provided in the fixing portion 9 and into which the bolt 19 is fastened. FIG. 4 indicates as an example, a form in which the recessed grooves 7 recessed in the axial direction L are formed at a plurality of positions in the circumferential direction C on an axial first side end surface 11c of the first protruding portion 13 of the inner case portion 1.

As shown in FIG. 3, the first protruding portion 13 of the inner case portion 1 and the second protruding portion 14 of the outer case portion 2 are joined so as to face each other in the axial direction L. Each recessed groove 7 is formed on a joint part in which the first protruding portion 13 and the second protruding portion 14 face each other and are joined together in a fixed state, that is, at least one of the axial first side end surface 11c of the first protruding portion 13 and an axial second side end surface 12c of the second protruding portion 14. Thus, due to the recessed groove 7, a gap is formed between the axial first side end surface 11c of the first protruding portion 13 of the inner case portion 1 and the axial second side end surface 12c of the second protruding portion 14 of the outer case portion 2. That is, by providing the recessed groove 7, the first protruding portion 13 and the second protruding portion 14 are not joined integrally without interruption over the entire area in the circumferential direction C, but are joined intermittently in the circumferential direction C. As a result, by changing the rigidity of the joint part between the first protruding portion 13 and the second protruding portion 14 and changing the degree of vibration transmission via the joint part, it is possible to reduce the possibility that particularly the second tubular portion 12 of the outer case portion 2 resonates with the vibration generated in the stator 24 or the harmonic component thereof.

As described above, the first protruding portion 13 and the second protruding portion 14 are fixed by the fastening member such as the bolt 19 in the fixing portion 9. The fixing portion 9 is provided at a plurality of places in the circumferential direction C. As shown in FIG. 4, the recessed grooves 7 are disposed on both sides of each of the plurality of fixing portions 9 in the circumferential direction C. That is, a pair of recessed grooves 7 is provided for each of the fixing portions 9. Specifically, for each of the fixing portions 9, a first recessed groove 71 is disposed on a first circumferential direction side C1 that is one side in the circumferential direction C, and a second recessed groove 72 is disposed on a second circumferential side C2 that is the other side in the circumferential direction C.

Here, a distance (first distance D1) between the fixing portion 9 and the first recessed groove 71 in the circumferential direction C, and a distance (second distance D2) between the fixing portion 9 and the second recessed groove 72 in the circumferential direction C are equal. The first distance D1 and the second distance D2 are distances along the circumferential direction C. When the first recessed groove 71 and the second recessed groove 72 are formed radially along the radius of a circle with the center of the rotor shaft 27 as a reference, the first recessed groove 71 and the second recessed groove 72 are spaced away by the same angle with the radius connecting the center of the rotor shaft 27 and the fixing portion 9 serving as a reference. When the first recessed groove 71 and the second recessed groove 72 are disposed in this way, processing and accuracy control when forming the recessed groove 7 is easy.

As described above, in the fixing portion 9, the first protruding portion 13 and the second protruding portion 14 are fixed and integrated. By disposing the pair of recessed grooves 7 with the fixing portion 9 sandwiched therebetween in the circumferential direction C, the integrated joint part of the first protruding portion 13 and the second protruding portion 14 can be separated for each fixing portion 9. That is, the axial first side end surface 11c of the first protruding portion 13 is divided by the grooves 7 into first end surface portions 11d each including the fixing portion 9 and second end surface portions 11e each not including the fixing portion 9. Each first end surface portion 11d is brought into pressure contact with the axial second side end surface 12c of the second protruding portion 14 by a fastening member such as the bolt 19. In contrast, although each second end surface portion 11e abuts against the axial second side end surface 12c of the second protruding portion 14, since the second end surface portion 11e is not fixed by the bolt 19, the second end surface portion 11e abuts against the axial second side end surface 12c with a pressure weaker than the pressure at which the first end surface portion 11d abuts against the axial second side end surface 12c. In this way, since an abutting pressure between the first protruding portion 13 and the second protruding portion 14 differs depending on the position in the circumferential direction C, the second protruding portion 14 (outer case portion 2) side of the joint part between the first protruding portion 13 and the second protruding portion 14 is suppressed from vibrating integrally with the stator 24. This makes it possible to change the degree of vibration transmission via the joint part between the first protruding portion 13 and the second protruding portion 14.

Moreover, in the form illustrated in FIG. 4, the lengths (angles) along the circumferential direction C of the first end surface portion 11d and the second end surface portion 11e are different. Thus, the resonance point of the first end surface portion 11d and the resonance point of the second end surface portion 11e are different. Therefore, also by the above, the degree of transmission of vibration via the joint part between the first protruding portion 13 and the second protruding portion 14 is changed, and the outer case portion 2 is suppressed from resonating with the stator 24. As described above, by providing the recessed grooves 7, the rigidity of the joint part between the first protruding portion 13 and the second protruding portion 14 is changed, and the outer case portion 2 is suppressed from resonating with the stator 24. Thus, this does not prevent the lengths (angles) along the circumferential direction C of the first end surface portion 11d and the second end surface portion 11e from being the same.

It is preferable that the grooves 7 be formed depending on a natural frequency of the stator 24. For example, it is preferable that the distance between the fixing portion 9 and the first recessed groove 71 in the circumferential direction C (first distance D1) and the distance between the fixing portion 9 and the second recessed groove 72 in the circumferential direction C (second distance D2) be set depending on the natural frequency of the stator 24. Further, for example, it is preferable that a width 7w of each recessed groove 7 in the circumferential direction C (see FIG. 4), a depth 7d of each recessed groove 7 in the axial direction L (see FIG. 3), the number of the recessed grooves 7, and an disposition interval 7p of the recessed grooves 7 in the circumferential direction C (see FIG. 3) also be set depending on the natural frequency of the stator 24.

The disposition interval 7p of the recessed grooves 7 is the length (or the angle) along the circumferential direction C with the center line of the recessed grooves 7 as a reference, along the radial direction R of the first tubular portion 11. That is, the disposition interval 7p represents the pitch (repetition cycle) of the recessed grooves 7 along the circumferential direction C, which does not depend on the width 7w of the recessed grooves 7 in the circumferential direction C. When the recessed grooves 7 are disposed with the fixing portion 9 sandwiched therebetween in the circumferential direction C, each disposition interval 7p includes a first disposition interval 7p1 that is an interval between the pair of recessed grooves 7 disposed with the fixing portion 9 sandwiched therebetween (the interval between the first recessed groove 71 and the second recessed groove 72 with the fixing portion 9 sandwiched therebetween) and a second disposition interval 7p2 that is an interval between a pair of recessed grooves 7 and a pair of recessed grooves 7 in which the pairs are adjacent to each other in the circumferential direction C (the interval between the first recessed groove 71 and the second recessed groove 72 in which the fixing portion 9 is not sandwiched therebetween). Further, the disposition interval 7p also includes a third disposition interval 7p3 including the first disposition interval 7p1 and the second disposition interval 7p2 (an interval in the circumferential direction C, between the first recessed grooves 71 or between the second recessed grooves 72).

The vibration of the stator 24 and the resonance point with the case 10 may differ depending on the natural frequency according to the electrical specifications and mechanical specifications of the stator 24. As described above, by forming the grooves 7 in accordance with the natural frequency of the stator 24, the case 10 that houses the stator 24 and that is fixed to the stator 24 can be effectively suppressed from resonating with the vibration of the stator 24.

The recessed groove 7 can be formed by post-processing, and the disposition position, the shape, etc. can be easily changed. Thus, tuning can be easily performed in accordance with the rotary electric machine 20. For example, by adjusting the width 7w of each recessed groove 7 in the circumferential direction C (see FIG. 3), the depth 7d of each recessed groove 7 in the axial direction L (see FIG. 3), the number of recessed grooves 7, and the disposition interval 7p of the recessed grooves 7 in the circumferential direction C (see FIG. 4) depending on the model and the purpose of using the rotary electric machine 20, it is possible to suppress the case 10 from resonating with the stator 24 based on each rotary electric machine 20.

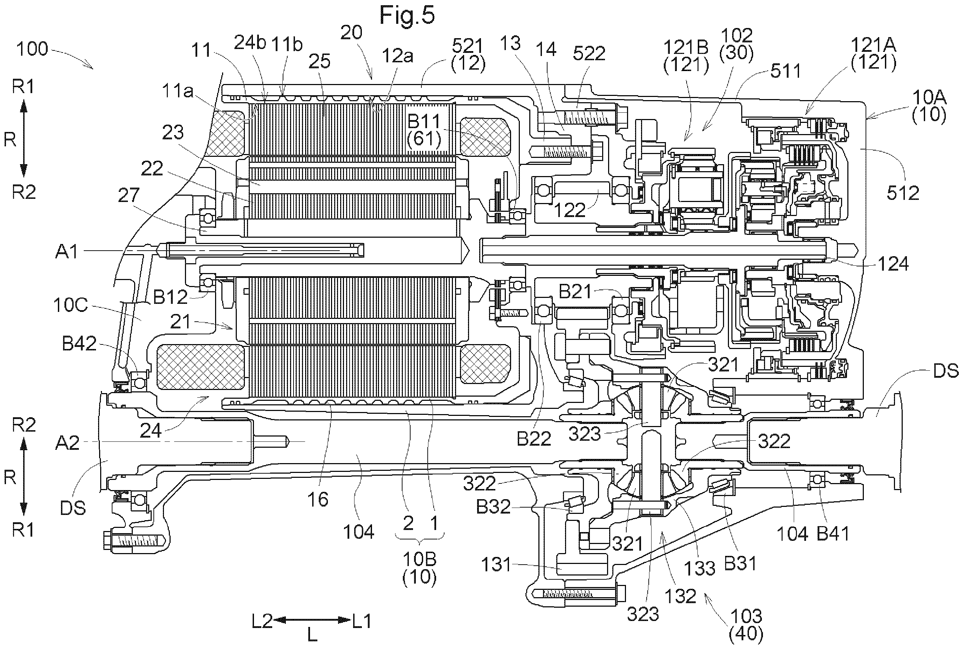

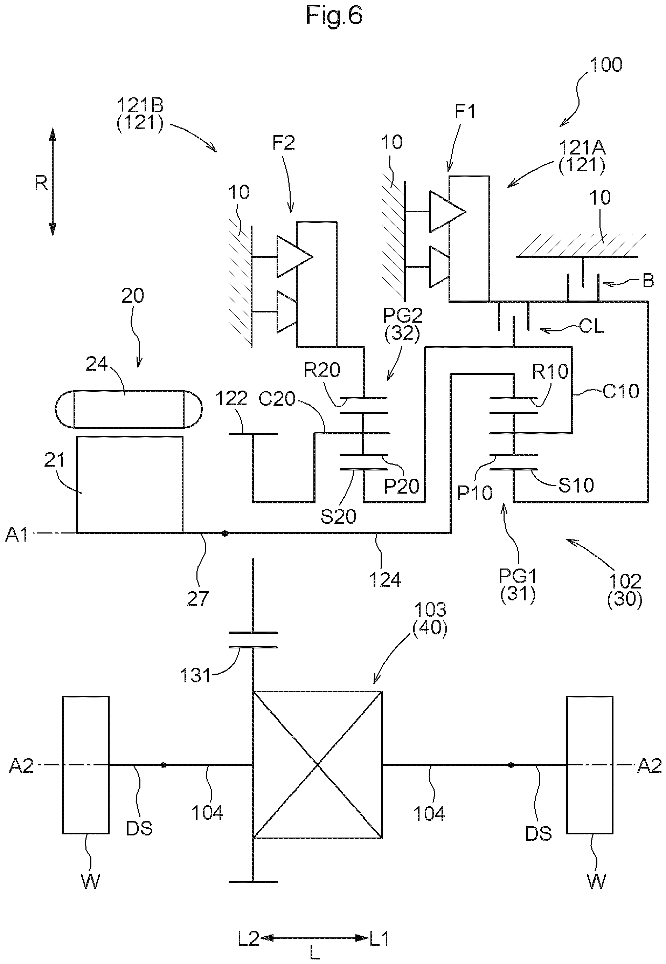

In the above description, the uniaxial vehicle drive device 100 in which the rotary electric machine 20, the speed reduction device 30, and the differential gear device 40 are coaxially disposed in the axial direction L has been described as an example. However, a configuration in which at least one of the rotary electric machine 20, the speed reduction device 30, and the differential gear device 40 has a different rotation axis, such as a biaxial vehicle drive device 100 as illustrated below with reference to FIGS. 5 and 6 is also possible.

As shown in FIGS. 5 and 6, the vehicle drive device 100 includes the rotary electric machine 20, a transmission 102, a differential gear device 103, and a pair of output members 104. The rotary electric machine 20, the transmission 102, the differential gear device 103, and the pair of output members 104 are housed in the case 10. A part of the pair of output members 104 is exposed to the outside of the case 10.

The rotary electric machine 20 and the transmission 102 are each disposed on a first axis A1 serving as a rotation axis thereof. The differential gear device 103 and the pair of output members 104 are disposed on a second axis A2 serving as the rotation axis thereof. The first axis A1 and the second axis A2 that are virtual axes different from each other and that are disposed in parallel with each other.

In the following description, the direction parallel to the first axis A1 and the second axis A2 is referred to as the "axial direction L" of the vehicle drive device 100. In the axial direction L, the side on which the transmission 102 is disposed with respect to the rotary electric machine 20 is referred to as the "axial first side L1", and the opposite side thereof is referred to as the "axial second side L2". A direction orthogonal to each of the first axis A1 and the second axis A2 is referred to as the "radial direction R" in which each axis serves as a reference. When it is not necessary to distinguish which axis is used as the reference or when it is clear which axis is used as the reference, the above direction may be simply referred to as the "radial direction R".

As shown in FIG. 5, the case 10 includes a first case portion 10A, a second case portion 10B joined to the first case portion 10A from the axial second side L2, and a cover portion 10C joined to the second case portion 10B from the axial second side L2. Joining of the first case portion 10A and the second case portion 10B and joining of the second case portion 10B and the cover portion 10C are each realized by a fastening member such as a bolt. The second case portion 10B has the inner case portion 1 and the outer case portion 2.

The first case portion 10A has a first peripheral wall portion 511 and a first side wall portion 512. The first peripheral wall portion 511 is formed in a tubular shape that surrounds the outside of the transmission 102 and the differential gear device 103 in the radial direction R. The first side wall portion 512 is fixed to an end portion of the first peripheral wall portion 511 on the axial first side L1 so as to close an opening of the first peripheral wall portion 511 on the axial first side L1.

The outer case portion 2 of the second case portion 10B has a second peripheral wall portion 521 and a second side wall portion 522. The second peripheral wall portion 521 is formed in a tubular shape that surrounds the outer side of the rotary electric machine 20 in the radial direction R. The second side wall portion 522 is fixed to an end portion of the second peripheral wall portion 521 on the axial first side L1 so as to close the opening of the second peripheral wall portion 521 on the axial first side L1. The second side wall portion 522 is formed so as to define the internal space of the first case portion 10A and the internal space of the second case portion 10B in a state in which the first case portion 10A and the second case portion 10B are joined.

The cover portion 10C is joined to the end of the second peripheral wall portion 521 on the axial second side L2 so as to close the opening of the second peripheral wall portion 521 on the axial second side L2.

The stator core 25 of the rotary electric machine 20 is supported by the second case portion 10B via the inner case portion 1. In the present embodiment, the inner case portion 1 is provided with the first tubular portion 11 formed in a tubular shape so as to be interposed between an inner peripheral surface of the second peripheral wall portion 521 and an outer peripheral surface of the stator core 25, and the first protruding portion 13 that is formed integrally with the first tubular portion 11 and that protrudes radially inward R2. The stator 24 (stator core 25) is fitted to the inner peripheral surface 11a of the first tubular portion 11. The first protruding portion 13 formed on the inner case portion 1 is fixed to the second protruding portion 14 formed on the second side wall portion 522 of the outer case portion 2 from the axial second side L2 by a fastening member such as a bolt. That is, the first protruding portion 13 and the second protruding portion 14 are fixed while being abutted against each other in the axial direction L. Further, in the present embodiment, the coolant flow path 16 for cooling the stator core 25 is formed between the inner case portion 1 and the outer case portion 2.

That is, also in the biaxial vehicle drive device 100 illustrated in FIGS. 5 and 6, the rotary electric machine 20 includes the stator 24, the rotor 21, and the case 10 (second case portion 10B) that houses the stator 24 and the rotor 21. The case 10 (second case portion 10B) has the inner case portion 1 to which the stator 24 is fixed, and the outer case portion 2 that houses the inner case portion 1. The inner case portion 1 has the first tubular portion 11 having the inner peripheral surface 11a that is in contact with the outer peripheral surface 24b of the stator 24, and the first protruding portion 13 that protrudes toward the radial inner side R2 from the first tubular portion 11 on the axial first side L1 that is one side in the axial direction L with respect to the stator 24. The outer case portion 2 has the second tubular portion 12 (second peripheral wall portion 521) that has a tubular shape and that covers the outer peripheral surface 11b of the first tubular portion 11, and the second protruding portion 14 that protrudes toward the radial inner side R2 from the second tubular portion 12 (second peripheral wall portion 521) on the axial first side L1 with respect to the first protruding portion 13. The coolant flow path 16 is formed between the first tubular portion 11 and the second tubular portion 12, and the first protruding portion 13 and the second protruding portion 14 are fixed to each other. Although not shown, as described above with reference to FIGS. 3 and 4, the recessed grooves 7 are formed on either or both of the surfaces on which the first protruding portion 13 and the second protruding portion 14 abut against.

The rotor shaft 27 is supported by the case 10 so that the rotor shaft 27 is rotatable. Specifically, the end portion of the rotor shaft 27 on the axial first side L1 is supported by the second side wall portion 522 (second protruding portion 14) of the case 10 via a first rotor bearing B11 (first rotor bearing 61) so that end portion is rotatable. The end of the rotor shaft 27 on the axial second side L2 is supported by the cover portion 10C of the case 10 via a second rotor bearing B12 so that the end portion is rotatable. Although not shown, the end portion of the rotor shaft 27 on the axial first side L1 may be supported by the first protruding portion 13 so that the end portion is rotatable, as in the embodiment illustrated in FIGS. 1 and 3.

The transmission 102 is a device that can change the speed ratio stepwise or in a stepless manner. The transmission 102 shifts the rotation transmitted from the rotary electric machine 20 side and transmits the rotation to the pair of output members 104 side. The transmission 102 has a transmission gear mechanism 121 and a transmission output gear 122.

The transmission gear mechanism 121 includes a transmission unit 121A and a speed reduction unit 121B. The transmission unit 121A is a unit that is capable of switching between a plurality of shift speeds having different speed ratios. In the illustrated example, the transmission output gear 122, the speed reduction unit 121B, and the transmission unit 121A are disposed from the axial second side L2 toward the axial first side L1, in the described order.

As shown in FIG. 6, in the present embodiment, the transmission unit 121A includes a first planetary gear mechanism PG1, a clutch CL, a brake B, and a first one-way clutch F1.

The first planetary gear mechanism PG1 has a first ring gear R10, a first sun gear S10, first pinion gears P10, and a first carrier C10.

The first ring gear R10 is an input element of the first planetary gear mechanism PG1. The first ring gear R10 is coupled with the rotor shaft 27 of the rotary electric machine 20 via a relay shaft 124 so that the first ring gear R10 rotates integrally with the rotor shaft 27.

The relay shaft 124 is a shaft member that transmits the rotation of the rotary electric machine 20 to the transmission gear mechanism 121. The end portion of the relay shaft 124 on the axial first side L1 is supported by the first side wall portion 512 of the case 10 via a bearing so that the end portion is rotatable.

The first sun gear S10 is disposed inside the first ring gear R10 in the radial direction R. The first sun gear S10 is supported by the relay shaft 124 that extends in the axial direction L through the inside of the first sun gear S10 in the radial direction R via a bearing so that the first sun gear S10 is rotatable. The first sun gear S10 is selectively fixed to the case 10 by the brake B and the first one-way clutch F1.

The first carrier C10 is an output element of the first planetary gear mechanism PG1. The first carrier C10 supports a plurality of first pinion gears P10 provided along a revolution path. The first pinion gears P10 mesh with both the first ring gear R10 and the first sun gear S10. Each first pinion gear P10 rotates (spins) around its axis and rotates (revolves) about the first sun gear S10.

The first one-way clutch F1 is an engagement device that restricts rotation of the first sun gear S10 in one direction. The first one-way clutch F1 is a selectable one-way clutch that is configured to be able to switch between a one-way restriction state in which rotation of the first sun gear S10 is restricted in one direction, a rotation restriction state in which bidirectional rotation of the first sun gear S10 is restricted, and a release state in which bidirectional rotation of the first sun gear S10 is allowed.

The reduction gear unit 121B includes a second planetary gear mechanism PG2 and a second one-way clutch F2.

The second planetary gear mechanism PG2 has a second sun gear S20, a second ring gear R20, second pinion gears P20, and a second carrier C20.

The second sun gear S20 is coupled so as to rotate integrally with the first carrier C10. That is, the second sun gear S20 is an input element of the second planetary gear mechanism PG2. The second sun gear S20 is supported via a bearing, so that the second sun gear S20 is rotatable about the relay shaft 124 that extends in the axial direction L through the inside of the second sun gear S20 in the radial direction R.

The second ring gear R20 is formed in an annular shape about the first axis A1 and is disposed on the outer side of the second sun gear S20 in the radial direction R. The second ring gear R20 is selectively fixed to the case 10 by the second one-way clutch F2.

The second carrier C20 is an output element of the second planetary gear mechanism PG2. The second carrier C20 supports a plurality of second pinion gears P20 provided along the revolution path so that the second pinion gears P20 are rotatable. The second pinion gears P20 mesh with both the second ring gear R20 and the second sun gear S20. Each second pinion gear P20 rotates (spins) about its axis and rotates (revolves) about the second sun gear S20.

The second one-way clutch F2 is an engagement device that restricts rotation of the second ring gear R20 in one direction. The second one-way clutch F2 is a selectable one-way clutch that is configured to be able to switch between a one-way restriction state in which rotation of the second ring gear R20 is restricted in one direction, a rotation restriction state in which bidirectional rotation of the second ring gear R20 is restricted, and a release state in which bidirectional rotation of the second ring gear R20 is allowed.

The transmission output gear 122 is coupled to the second carrier C20 so as to rotate integrally therewith, and is supported via a first speed change output bearing B21 so that the transmission output gear 122 is rotatable. Further, the transmission output gear 122 is supported by the second side wall portion 522 of the case 10 via a second shift output bearing B22 so that the transmission output gear 122 is rotatable.

The differential gear device 103 is a device that distributes the driving force transmitted from the transmission 102 side to the pair of output members 104. The differential gear device 103 has a differential input gear 131 and a differential gear mechanism 132. The differential gear mechanism 132 is housed in a hollow differential case 133. The differential case 133 is supported by the case 10 via a first differential bearing B31 so that the differential case 133 is rotatable. Further, the differential case 133 is supported by the second side wall portion 522 of the case 10 via a second differential bearing B32.

The differential input gear 131 is an input element of the differential gear device 103. The differential input gear 131 meshes with the transmission output gear 122 of the transmission 102. The differential input gear 131 is formed so as to project outward in the radial direction R from the differential case 133. The differential input gear 131 is coupled to the differential case 133 so as to rotate integrally therewith.

The differential gear mechanism 132 distributes the rotation of the differential input gear 131 to the pair of output members 104. The differential gear mechanism 132 includes a pair of pinion gears 321 and a pair of side gears 322. Here, the pair of pinion gears 321 and the pair of side gears 322 are both bevel gears.

The pair of pinion gears 321 are disposed so as to face each other at intervals along the radial direction R with the second axis A2 serving as a reference. Each of the pair of pinion gears 321 is attached to a pinion shaft 323 that is supported so as to rotate integrally with the differential case 133. Each of the pair of pinion gears 321 is configured to be rotatable (be able to spin) about the pinion shaft 323 and be rotatable (be revolvable) about the second axis A2.

The pair of side gears 322 are rotating elements for the driving force after distribution in the differential gear device 103. The pair of side gears 322 are disposed so as to be spaced away from each other in the axial direction L and to face each other with the pinion shaft 323 interposed therebetween. The pair of side gears 322 mesh with the pair of pinion gears 321. Each of the pair of side gears 322 is coupled so as to rotate integrally with the output member 104.

Each of the pair of output members 104 is drive coupled to the wheel W. Each of the pair of output members 104 is coupled to the wheel W via a drive shaft DS.

As shown in FIG. 5, the output member 104 on the axial first side L1 is supported by the first peripheral wall portion 511 of the case 10 via a first output bearing B41 so that the output member 104 is rotatable. The output member 104 on the axial second side L2 is supported by the cover portion 10C of the case 10 via a second output bearing B42.

### [Other Embodiments]

Hereinafter, other embodiments will be described. The configurations of each embodiment described below are not limited to being applied individually, and may be applied in combination with the configurations of other embodiments as long as no contradiction occurs.
(1) In the above description, the bevel gear type differential gear device 40 is described as an example. However, the differential gear device 40 is not limited to the bevel gear type and may be a planetary gear type.
(2) In the above description, described is an example of the configuration in which the differential case of the differential gear device 40 is formed integrally with the second carrier C32 of the second planetary gear mechanism 32. However, the configuration is not limited to such a configuration, and may be such that the differential case and the second carrier C32 can be separated from each other (for example, a configuration in which the differential case and the second carrier C32 are coupled to each other by a bolt, a spline, or the like).
(3) Described above as examples are the uniaxial vehicle drive device 100 in which the rotary electric machine 20, the speed reduction device 30, and the differential gear device 40 are coaxially disposed in the axial direction L, and the biaxial vehicle drive device in which at least one of the rotary electric machine 20, the speed reduction device 30, and the differential gear device 40 has a different rotation shaft. However, an embodiment in which the rotary electric machine 20, the speed reduction device 30, and the differential gear device 40 each have a different rotation axis such as a three-axis vehicle drive device is also possible.
(4) In the embodiment described with reference to FIGS. 1 and 3, a structure is described as an example in which the first protruding portion 13 of the first tubular portion 11 extends to the radial inner side R2 of the second protruding portion 14 of the second tubular portion 12, and the first protruding portion 13 supports the first rotor bearing 61, which supports the rotor 21 so that the rotor 21 is rotatable, on the axial first side L1 with respect to the rotor 21. Similar to the embodiment described with reference to FIG. 5, the second protruding portion 14 of the second tubular portion 12 may extend to the radial inner side R2 more than the first protruding portion 13 of the first tubular portion 11, and the second protruding portion 14 may support the first rotor bearing 61 (first rotor bearing B11) on the axial first side L1 with respect to the rotor 21. Similarly, also in the embodiment described above with reference to FIG. 5, the first protruding portion 13 of the first tubular portion 11 may extend to the radial inner side R2 more than the second protruding portion 14 of the second tubular portion 12, and the first protruding portion 13 may support the first rotor bearing 61 (first rotor bearing B11) on the axial first side L1 with respect to the rotor 21.
(5) Described above as an example with reference to FIGS. 3 and 4 is the embodiment in which the recessed grooves 7 are formed in the first protruding portion 13. Although not shown, the recessed grooves 7 may be formed in the second protruding portion 14. Similarly, although not shown, the recessed grooves 7 may be formed in both the first protruding portion 13 and the second protruding portion 14. In such a case, the embodiment may be such that when the recessed grooves 7 formed in the first protruding portion 13 and the recessed grooves 7 formed in the second protruding portion 14 are formed at the same positions in the circumferential direction C and the first protruding portion 13 and the second protruding portion 14 abut against each other and are fixed, the pair of recessed grooves 7 face each other in the axial direction L. Alternatively, the embodiment may be such that when the recessed grooves 7 formed in the first protruding portion 13 and the recessed grooves 7 formed in the second protruding portion 14 are formed at different positions in the circumferential direction C and the first protruding portion 13 and the second protruding portion 14 abut against each other and are fixed, the pair of recessed grooves 7 do not face each other in the axial direction L.

### [Summary of the Embodiments]

Hereinafter, the summary of the rotary electric machine (20) and the vehicle drive device (100) including the rotary electric machine (20) described above will be described briefly.

As one aspect, a rotary electric machine (20) includes: stator (24); a rotor (21); and a case (10) that houses the stator (24) and the rotor (21), in which the case (10) has an inner case portion (1) to which the stator (24) is fixed, and an outer case portion (2) that houses the inner case portion (1), the inner case portion (1) is provided with a first tubular portion (11) having an inner peripheral surface (11a) that is in contact with an outer peripheral surface (24b) of the stator (24), and a first protruding portion (13) that protrudes to a radial inner side (R2) from the first tubular portion (11) on an axial first side (L1) that is one side in an axial direction (L) with respect to the stator (24), the outer case portion (2) has a second tubular portion (12) that has a tubular shape and that covers an outer peripheral surface (11b) of the first tubular portion (11), and a second protruding portion (14) that protrudes to a radial inner side (R2) from the second tubular portion (12) on the axial first side (L1) with respect to the first protruding portion (13), a coolant flow path (16) is formed between the first tubular portion (11) and the second tubular portion (12), and the first protruding portion (13) and the second protruding portion (14) are fixed to each other.

With this configuration, the inner case portion (1) and the outer case portion (2) are fixed to each other, on the radial inner side (R2) of the first tubular portion (11) of the inner case portion (1). When the inner case portion (1) and the outer case portion (2) are fixed on the radial outer side (R1) of the first tubular portion (11) of the inner case portion (1), a vibration that is transmitted from the stator (24) to the inner case portion (1) is easily transmitted to an outer peripheral surface side of the outer case portion (2). With the present configuration, since both case portions (1, 2) are fixed on the radial inner side (R2) of the first tubular portion (11), it is possible to dampen the vibration that is transmitted from the stator (24) to the outer case portion (2) via the inner case portion (1), compared to a case in which both cases (1, 2) are fixed on the radial outer side (R1) of the first tubular portion (11). As a result, it is possible to suppress sound and vibration transmitted from the outer case portion (2) to the outside. With the present configuration, when the case (10) of the rotary electric machine (20) has the inner case member (1) that houses the stator (24) and the outer case member (2) that houses the inner case member (1), it is possible to suppress the vibration that is transmitted from the stator (24) to the outer case member (2) via the inner case member (1).

Here, it is preferable that an outer peripheral surface of the stator is fitted to the inner peripheral surface of the first tubular portion.

With the present configuration, since an outer peripheral surface (24b) of the stator (24) is in close contact with an inner peripheral surface (11a) of the first tubular portion (11), high cooling efficiency of the stator (24) that uses the coolant flow path (16) can be ensured. In contrast, although the vibration is easily transmitted from the stator (24) to the first tubular portion (11), as described above, since the inner case portion (1) and the outer case portion (2) are fixed on the radial inner side (R2) of the first tubular portion (11), vibration and noise can be suppressed while high cooling efficiency is ensured.

Further, it is preferable that the first protruding portion (13) be formed integrally with the first tubular portion (11).

With the present configuration, rigidity of the inner case portion (1) is higher than that in the case in which the first protruding portion (13) and the first tubular portion (11) are formed as separate bodies and coupled to each other. Further, the vibration transmitted from the stator (24) to the first tubular portion (11) can be appropriately transmitted to the first protruding portion (13) to damp the vibration.

Further, it is preferable that the first protruding portion (13) and the second protruding portion (14) be fixed while abutting against each other in the axial direction (L).

With the present configuration, the inner case portion (1) and the outer case portion (2) can be fixed to each other in a properly positioned state.

Further, when the first protruding portion (13) and the second protruding portion (14) are fixed while being abutted against each other in the axial direction (L), it is preferable that a recessed groove (7) be formed on either one surface or both surfaces on which the first protruding portion (13) and the second protruding portion (14) abut against each other.

When the first protruding portion (13) is continuous in the circumferential direction (C), the second protruding portion (14) is continuous in the circumferential direction (C), and the first protruding portion (13) and the second protruding portion (14) are fixed, the first protruding portion (13) and the second protruding portion (14) are seamlessly joined over the entire area in the circumferential direction (C). The vibration transmitted through the joint part may cause the case (10) to resonate with the vibration generated in the stator (24) or a harmonic component thereof, and the noise may be increased. However, according to this configuration, since the recessed grooves (7) are formed, the first protruding portion (13) and the second protruding portion (14) are not joined seamlessly over the entire circumference in the circumferential direction (C), but are joined intermittently in the circumferential direction (C). Thus, the degree of vibration transmission via the joint part between the first protruding portion (13) and the second protruding portion (14) can be changed, and the possibility that the case (10) resonates with the vibration generated in the stator (24) or the harmonic component thereof can be reduced. The recessed grooves (7) can be formed in one or both of the first protruding portion (13) and the second protruding portion (14) by post-processing, and the disposition position thereof can be easily changed. Thus, tuning can be easily performed in accordance with the characteristics of the rotary electric machine (20). That is, by providing the recessed grooves (7), it is possible to suppress the case (10) housing the stator (24) from resonating with the vibration of the stator (24).

It is preferable that the first protruding portion (13) supports a rotor bearing (61) that supports the rotor (21) so that the rotor (21) is rotatable, on the axial first side (L1) with respect to the rotor (21).

With this configuration, the rotor (21) can also be supported by the first protruding portion (13) that fixes the inner case portion (1) and the outer case portion (2) and thus, the structure of the rotary electric machine (20) can be simplified.

As one aspect, it is preferable that the vehicle drive device (100) be configured so as to include a rotary electric machine (20) having any of the above-described configurations, and a differential gear device (40) that distributes a driving force from the rotary electric machine (20) to each of a plurality of wheels (501, 502), in which the case (10) houses the differential gear device (40) in addition to the rotary electric machine (20), and the rotary electric machine (20) and the differential gear device (40) are disposed coaxially.

With this configuration, it is possible to realize the vehicle drive device (100) in which the wheels (501, 502) are driven and which has a small dimension in the direction orthogonal to the axial direction (L).

It is preferable that the vehicle drive device (100) further include a speed reduction device (30) for reducing a speed of rotation transmitted from the rotary electric machine (20) and transmitting the rotation to the differential gear device (40), and the first protruding portion (11) support a fixed element (R31) in the speed reduction device (30).

With this configuration, since the fixed element (R31) of the speed reduction device (30) can also be supported by the first protruding portion (13) that fixes the inner case portion (1) and the outer case portion (2), the structure of the vehicle drive device (100) can be simplified.

Here, when the first protruding portion (11) supports the fixed element (R31) in the speed reduction device (30), it is preferable that a fixing portion (38) of the first protruding portion (11) and the fixed element (R31) be disposed on a radial inner side (R2) of the fixed element (R31).

With this configuration, compared to the case in which the fixing portion (38) is provided at the same radial position as the fixed element (R31) or at the radial outer side (R1) thereof, the vibration transmitted from the speed reduction device (30) to the inner case portion (1) can be damped. Thus, the sound and the vibration transmitted to the outer case portion (2) via the inner case portion (1) and transmitted to the outside from the outer case portion (2) can be suppressed to a small level.

### Description of the Reference Numerals

1: Inner case portion
2: Outer case portion
10: Case
11: First tubular portion
11a: Inner peripheral surface (an inner peripheral surface of a first tubular portion)
11b: Outer peripheral surface (an outer peripheral surface of the first tubular portion)
12: Second tubular portion
12a: Inner peripheral surface (an inner peripheral surface of the second tubular portion)
13: First protruding portion
14: Second protruding portion
16: Coolant flow path
20: Rotary electric machine
21: Rotor
24: Stator
24b: Outer peripheral surface of the stator
30: Speed reduction device
31: First planetary gear mechanism (speed reduction mechanism)
38: Fixing portion (a fixing portion between a fixed element in the speed reduction device and the first protruding portion)
40: Differential gear device
61: First rotor bearing (rotor bearing)
100: Vehicle drive device
L: Axial direction
L1: Axial first side
L2: Axial second side
R: Radial direction
R2: Radial inner side
R31: First ring gear (the fixed element in the speed reduction device)

## Claims

1. A rotary electric machine comprising:
a stator;
a rotor; and
a case that houses the stator and the rotor, wherein
the case has an inner case portion to which the stator is fixed, and an outer case portion that houses the inner case portion,
the inner case portion has a first tubular portion having an inner peripheral surface that is in contact with an outer peripheral surface of the stator, and a first protruding portion that protrudes to a radial inner side from the first tubular portion on an axial first side that is one side in an axial direction with respect to the stator,
the outer case portion has a second tubular portion that has a tubular shape and that covers an outer peripheral surface of the first tubular portion, and a second protruding portion that protrudes to a radial inner side from the second tubular portion on the axial first side with respect to the first protruding portion,
a coolant flow path is formed between the first tubular portion and the second tubular portion, and
the first protruding portion and the second protruding portion are fixed to each other.

2. The rotary electric machine according to claim 1, wherein the outer peripheral surface of the stator is fitted to the inner peripheral surface of the first tubular portion.

3. The rotary electric machine according to claim 1 or 2, wherein the first protruding portion is formed integrally with the first tubular portion.

4. The rotary electric machine according to any one of claims 1 to 3, wherein the first protruding portion and the second protruding portion are fixed while abutting against each other in the axial direction.

5. The rotary electric machine according to claim 4, wherein a recessed groove is formed on either surface or both surfaces on which the first protruding portion and the second protruding portion abut against each other.

6. The rotary electric machine according to any one of claims 1 to 5, wherein the first protruding portion supports a rotor bearing that supports the rotor so that the rotor is rotatable, on the axial first side with respect to the rotor.

7. A vehicle drive device comprising:
the rotary electric machine according to any one of claims 1 to 6; and
a differential gear device that distributes a driving force from the rotary electric machine to each of a plurality of wheels, wherein
the case houses the differential gear device in addition to the rotary electric machine, and
the rotary electric machine and the differential gear device are disposed coaxially.

8. The vehicle drive device according to claim 7, further comprising a speed reduction device for reducing a speed of rotation transmitted from the rotary electric machine and transmitting the rotation to the differential gear device, wherein
the first protruding portion supports a fixed element in the speed reduction device.

9. The vehicle drive device according to claim 8, wherein a fixing portion of the first protruding portion and the fixed element is disposed on a radial inner side of the fixed element.
